Europäisches Patentamt

European Patent Office

Office européen des brevets

(19)

(11) **EP 1 330 806 B1**

(12) **FASCICULE DE BREVET EUROPEEN**

(45) Date de publication et mention
de la délivrance du brevet:
**28.06.2006 Bulletin 2006/26**

(51) Int Cl.:
***G08G 5/04*** *(2006.01)* ***B64C 13/20*** *(2006.01)*

(21) Numéro de dépôt: **01980611.6**

(22) Date de dépôt: **19.10.2001**

(86) Numéro de dépôt international:
**PCT/FR2001/003254**

(87) Numéro de publication internationale:
**WO 2002/035497 (02.05.2002 Gazette 2002/18)**

(54) **PROCEDE DE GUIDAGE D'UN AERONEF DANS LE CADRE D'UN VOL EN CONVOI**

VERFAHREN ZUR FÜHRUNG EINES FLUGZEUGS IN EINER FORMATION

METHOD FOR GUIDING AN AIRCRAFT DURING A CONVOY FLIGHT

(84) Etats contractants désignés:
**DE ES FR GB**

(30) Priorité: **27.10.2000 FR 0013846**

(43) Date de publication de la demande:
**30.07.2003 Bulletin 2003/31**

(73) Titulaire: **Thales**
**75008 Paris (FR)**

(72) Inventeur: **Sainthuile, Gérard**
**Thales Intellectual Property**
**94117 Arcueil Cedex (FR)**

(74) Mandataire: **Guérin, Michel**
**Marks & Clerk France**
**31-33 Avenue Aristide Briand**
**94117 Arcueil Cédex (FR)**

(56) Documents cités:
**WO-A-00/41154       FR-A- 2 632 755**
**US-A- 4 674 710      US-A- 5 521 817**
**US-A- 5 906 336**

**EP 1 330 806 B1**

**Description**

La présente invention concerne le guidage d'un aéronef pour lui permettre, une fois insérer dans le trafic d'un couloir aérien, de conserver une distance minimale de séparation avec l'aéronef qui le précède pour prévenir tout risque de collision.

Le problème d'insertion dans le trafic d'un couloir aérien, connu sous l'appellation anglo-saxonne "follow traffic", s'est posé dès l'origine de l'aviation, pour l'accès aux pistes d'atterrissage et a été longtemps résolu uniquement par la technique du vol à vue qui consiste, pour le pilote d'un aéronef, à pratiquer une surveillance visuelle de son environnement pour repérer les autres aéronefs évoluant dans son voisinage et surtout un éventuel aéronef le précédant sur la même trajectoire, et à agir sur ses mannettes de gaz pour conserver une distance apparente par rapport à cet aéronef suffisante pour éviter tout risque de collision. Cette technique, encore largement pratiquée, dans le cadre de procédures très réglementées, n'est sûre qu'en cas de bonne visibilité et de faible trafic. Lorsque le trafic aérien est un tant soit peu important comme au-dessus de l'Europe ou du continent Nord Américain, la technique du vol à vue est doublée d'un routage des aéronefs depuis le sol, par des contrôleurs aériens qui affectent aux aéronefs des positions et vitesses leur permettant de s'insérer dans le trafic d'un couloir aérien en respectant des distances minimales de séparation entre aéronefs éliminant les risques de collision. Cependant, même renforcée par une régulation du trafic par une autorité de contrôle aérien, la sûreté de la technique du vol à vue dépend des conditions de visibilité de sorte que, pour maintenir un même niveau de sécurité, il faut un espacement minimum entre aéronefs d'autant plus grand que les conditions de visibilité sont mauvaises.

Les équipements de navigation et de radiocommunication ayant progressé en fiabilité et précision, on envisage de limiter l'étendue du domaine d'action des contrôleurs aériens aux zones de fort trafic avec des couloirs aériens imposés et de laisser, en dehors de ces zones, c'est-à-dire dans l'espace supérieur, les aéronefs maîtres de leur navigation pour assurer une meilleure fluidité du trafic. La contrepartie de cette autonomie de navigation dans l'espace supérieur est la nécessité pour les aéronefs d'assurer par eux-mêmes leur sécurité anticollision. Dans ce but, et celui d'une meilleure sécurité, il est proposé d'équiper les aéronefs avec un système dit ADS-B, sigle tiré de l'anglo-saxon "Automatic Dependent Surveillance Broadcast", par lequel un aéronef informe les autres aéronefs évoluant dans le voisinage et des stations terrestres à sa portée, de sa position et de son vecteur vitesse, soit périodiquement, soit sur interrogation.

Un aéronef évoluant au milieu d'un trafic d'autres aéronefs équipés du système ADS-B est en mesure de connaître sa situation par rapport aux autres aéronefs et de prévoir, à court terme, l'évolution de cette situation et donc les risques de collision encourus à court et moyen termes, si aucune correction n'est apportée aux trajectoires des aéronefs considérés. Fort de cette connaissance, il est à même de modifier sa trajectoire ou de demander à un autre aéronef de modifier sa trajectoire pour éliminer des risques de collision.

Différentes méthodes directement utilisables par les calculateurs de navigation, embarqués à bord des aéronefs ont déjà été proposées pour détecter les risques de collisions avec d'autres aéronefs et pour déterminer les corrections de route permettant d'éliminer ces risques au prix d'un minimum de détour.

D'autres méthodes, toujours directement utilisables par les calculateurs de navigation, embarqués à bord d'aéronef ont également été proposées, dans une discipline voisine qui est celle des vols en escadrille, pour le maintien automatique de distances constantes entre le leader et les équipiers quelle que soit la trajectoire suivie par le leader.

Le brevet américain US 4,674,710 décrit un exemple de méthode de maintien automatique des distances entre les équipiers et le leader d'une escadrille au cours d'un virage. Dans ce premier exemple, la connaissance, au niveau de chaque équipier, de la distance, du cap et de la vitesse air du leader est utilisée pour faire estimer par un équipier des distances de consigne à respecter vis à vis du leader, à la fois en longitudinal et en latéral. Chaque équipier déduit alors la vitesse air à adopter de celle du leader et de l'évolution de ses erreurs de placement par rapport aux distances de consigne à respecter. Une telle méthode, qui recherche, en permanence, le respect de distances de consigne en latéral et en longitudinal par rapport à un leader a l'avantage de permettre de mieux maintenir les aéronefs des équipiers au centre de leur enveloppe de vol. Par contre elle impose des modifications fréquentes d'accélération qui nuisent au confort des passagers et qui font qu'elle n'est pas très adaptée au maintien d'une distance de sécurité entre des aéronefs de passagers suivant une même portion de route.

La demande internationale de brevet WO 00/41154 décrit un exemple de système pour maintenir la position et les distances de séparation de sécurité d'un aéronef au sein d'une escadrille. Elle s'intéresse plutôt à une gestion particulière des communications radio par transpondeurs entre les aéronefs de l'escadrille pour situer chaque aéronef par rapport à ses voisins au sein de l'escadrille et ne s'étend pas sur la manière d'extraire des ordres de pilotage des informations recueillies qu'elle considère connue de l'homme du métier (page 14, lignes 23 à page 15, ligne 1).

La présente invention a pour but un maintien automatique des distances de sécurité entre aéronefs suivant une même portion de route avec un minimum de modifications de la vitesse air pour un plus grand confort des passagers.

Cette aide supplémentaire apportée à l'équipage de l'aéronef et à une éventuelle autorité de contrôle aérien intervenante peut permettre de réduire l'espacement entre aéronefs pour un même niveau de sécurité et donc d'accroître le trafic dans un couloir aérien

L'invention a pour objet un procédé de guidage d'un aéronef dit esclave dans le cadre d'un vol en convoi, derrière un autre aéronef dit maître, sur une même trajectoire prédéterminée et avec une distance minimum de séparation de consigne $D_{SEP}$, consistant, à donner à la vitesse calculée par rapport à l'air $V_{CAS,S}$ de l'aéronef esclave, c'est-à-dire calculée à partir des mesures de température et de pressions statique et dynamique et connue sous l'appellation anglo-saxonne de "Calculated Air Speed", une valeur initiale $V_{CAS0,S}$, à déduire périodiquement, la distance séparant l'aéronef esclave de l'aéronef maître de la position géographique de l'aéronef esclave et de celle de l'aéronef maître en un même instant et de la forme connue de la trajectoire suivie par les aéronefs maître et esclave, puis à corriger périodiquement la vitesse calculée par rapport à l'air $V_{CAS,S}$ de l'aéronef esclave en la modifiant avec un terme correctif E tiré de l'écart constaté entre la distance de séparation mesurée $D_M$ et la distance minimum de séparation de consigne $D_{SEP}$, conformément à une relation de récurrence de la forme :

$$\begin{cases} V_{CAS,S}(t_0) = V_{CAS0,S}(t_0) \\ V_{CAS,S}(t_0 + k\Delta t) = V_{CAS,S}(t_0 + (k-1)\Delta t) + E((D_{SEP} - D_M), (t_0 + (k-1)\Delta t)) \end{cases}$$

$\Delta t$ étant la périodicité de la correction, $D_M(t_0+(k-1)\Delta t)$ la distance de séparation mesurée à l'instant $(t_0+(k-1)\Delta t)$. Ce procédé est remarquable en ce que l'on se donne une marge de tolérance $\Delta L$ sur la valeur de l'écart entre la distance mesurée $D_M$ et la distance de consigne $D_{SEP}$ considérée relativement à la distance de consigne $D_{SEP}$ en deçà de laquelle le terme correctif E prend une valeur nulle et au-delà de laquelle le terme correctif prend une valeur proportionnelle à l'écart constaté entre la distance de séparation mesurée $D_M$ et la distance minimum de séparation de consigne $D_{SEP}$.

Avantageusement, la valeur initiale de la vitesse calculée par rapport à l'air de l'aéronef esclave est prise égale à la vitesse calculée par rapport à l'air prévue lors de la préparation du plan de vol de l'aéronef esclave 2, à l'endroit où il se trouve au moment de la mise en oeuvre du procédé de guidage, cette vitesse calculée par rapport à l'air résultant de l'application d'une loi de définition 4D, c'est-à-dire fonction des quatre variables : altitude, temps, latitude et longitude, ce cas étant adapté à une situation où l'aéronef est en descente, par exemple en approche d'une piste d'atterrissage.

Avantageusement, la valeur initiale de la vitesse calculée par rapport à l'air de l'aéronef esclave est prise égale à une vitesse calculée par rapport à l'air adoptée en croisière pour optimiser la consommation.

Avantageusement, la valeur initiale de la vitesse calculée par rapport à l'air de l'aéronef esclave est prise égale à la vitesse calculée par rapport à l'air de l'aéronef maître au moment où il passait sensiblement au même point de la trajectoire.

Avantageusement, on introduit un phénomène d'hystérésis autour de la marge de tolérance $\Delta L$, en donnant à cette dernière une valeur réduite à chaque détection de son franchissement, et cela, tant que dure le franchissement.

Avantageusement, dans le cas où il existe une marge de tolérance de consigne $\Delta L_c$, on adopte une marge de tolérance effective $\Delta L_e$ plus sévère que la marge de tolérance de consigne $\Delta L_c$ en appliquant à la marge de tolérance de consigne $\Delta L_c$ un coefficient de sécurité k' positif et inférieur à 1, par exemple 0,8 pour que la marge de tolérance de consigne $\Delta L_c$ ne soit jamais atteinte :

$$\Delta L_e = k'\Delta L_c \quad avec \quad 0 < k' \le 1$$

Avantageusement, dans le cas où la marge de tolérance effective $\Delta L_e$ est déduite d'une marge de tolérance de consigne $\Delta L_c$ par application d'un coefficient de sécurité k', on introduit un phénomène d'hystérésis autour de la marge de tolérance effective $\Delta L_e$ en donnant à cette dernière, lorsqu'elle vient d'être franchie une valeur réduite déduite de la marge de tolérance de consigne $\Delta L_c$ par application d'un coefficient d'hystérésis k" positif et inférieur au coefficient de sécurité k', par exemple, pris égal à :

$$k" = \frac{1}{2k'}$$

cela tant que dure le franchissement.

Avantageusement, le terme correctif E est pris proportionnel à l'écart constaté entre la distance de séparation mesurée $D_M$ et la distance minimum de séparation de consigne $D_{SEP}$ avec un coefficient de proportionnalité p pris égal à :

$$p = S_{ep} \times M$$

avec :

$$
\begin{cases}
S_{ep} = 1 \quad si \quad
\begin{cases}
\dfrac{\left|(D_M - D_{SEP})\right|}{D_{SEP}} > k' \times \Delta L_c & et \quad S_{ep} = 0 \quad \text{au préalable} \\
ou \\
\dfrac{\left|(D_M - D_{SEP})\right|}{D_{SEP}} > k'' \times \Delta L_c & et \quad S_{ep} = 1 \quad \text{au préalable}
\end{cases} \\[4pt]
et \\[4pt]
S_{ep} = 0 \quad si \quad
\begin{cases}
\dfrac{\left|(D_M - D_{SEP})\right|}{D_{SEP}} < k'' \times \Delta L_c & et \quad S_{ep} = 1 \quad \text{au préalable} \\
ou \\
\dfrac{\left|(D_M - D_{SEP})\right|}{D_{SEP}} < k' \times \Delta L_c & et \quad S_{ep} = 0 \quad \text{au préalable}
\end{cases}
\end{cases}
$$

$\Delta L_c$ étant un pourcentage de tolérance de consigne, k' un coefficient de sécurité positif inférieur à l'unité, k'' un coefficient d'hystérésis et M un coefficient d'homogénéisation de la distance par rapport à la vitesse.

Avantageusement, le coefficient M d'homogénéisation est pris égal à :

$$M = \frac{120kts}{1NM}$$

kts étant une vitesse en noeuds et NM un mile nautique.

Avantageusement, la distance de séparation mesurée $D_M$ est la composante horizontale de la distance de séparation vraie.

Avantageusement, la mesure de la distance $D_M$ séparant à un instant donné, l'aéronef esclave de l'aéronef maître sur une trajectoire rectiligne, est prise égale à :

$$D_M = R \times Arc\cos\left(\cos(Lat_M) \times \cos(Lat_S) \times \cos(Long_M - Long_S) + \sin(Lat_M) \times \sin(Lat_S)\right)$$

$Lat_M$ et $Long_M$ définissant la position géographique de l'aéronef maître, $Lat_S$ et $Long_S$ la position géographique de l'aéronef esclave et R étant le rayon de la terre.

Avantageusement, la distance séparant à un instant donné, l'aéronef esclave de l'aéronef maître alors que l'aéronef esclave se trouve sur une partie rectiligne, de cap $\chi_P$, de la trajectoire suivie par les deux aéronefs, et l'avion maître sur une autre partie rectiligne, de cap $\chi_S$ de cette trajectoire, raccordées l'une à l'autre par un arc de cercle de rayon r, débutant en un point $P_1$ marquant la fin de la partie rectiligne de trajectoire parcourue par l'aéronef esclave et se terminant en un point $P_2$ marquant le début de la partie rectiligne de trajectoire parcourue par l'aéronef maître, est prise égale à la somme des distances séparant l'aéronef esclave du point $P_1$ et le point $P_2$ de l'aéronef maître augmentée de la longueur L de l'arc de cercle prise égale à :

$$L = r(\chi_s - \chi_P)$$

les caps $\chi_P$ et $\chi_S$ étant exprimés en radians.

Avantageusement, la distance de consigne de séparation $D_{SEP}$ est déduite d'une consigne de délai minimum $\Delta T$ entre les passages des deux aéronefs par un même point de la trajectoire par application de la relation :

$$D_{SEP} = \Delta T \times V_{TAS,S}$$

$V_{TAS,S}$ étant la vraie vitesse dans l'air de l'aéronef esclave, connue sous la désignation de vitesse TAS provenant du terme anglo-saxon "True Air Speed".

Avantageusement, la distance de consigne de séparation $D_{SEP}$ est tirée d'une table de définition la donnant en fonction de l'altitude.

Avantageusement, la distance de consigne de séparation $D_{SEP}$ est une consigne de distance donnée par un contrôleur aérien.

Avantageusement, la localisation de l'aéronef maître est transmise de manière coopérative par ce dernier à l'aéronef esclave au moyen d'un système tel que l'ADS-B.

Avantageusement, l'aéronef esclave acquiert la localisation de l'aéronef maître au moyen d'un radar embarqué.

Avantageusement, l'aéronef esclave acquiert la localisation de l'aéronef maître par l'intermédiaire d'une station de localisation au sol.

D'autres caractéristiques et avantages de l'invention ressortiront de la description ci-après d'un mode de réalisation donné à titre d'exemple. Cette description sera faite en regard du dessin dans lequel :

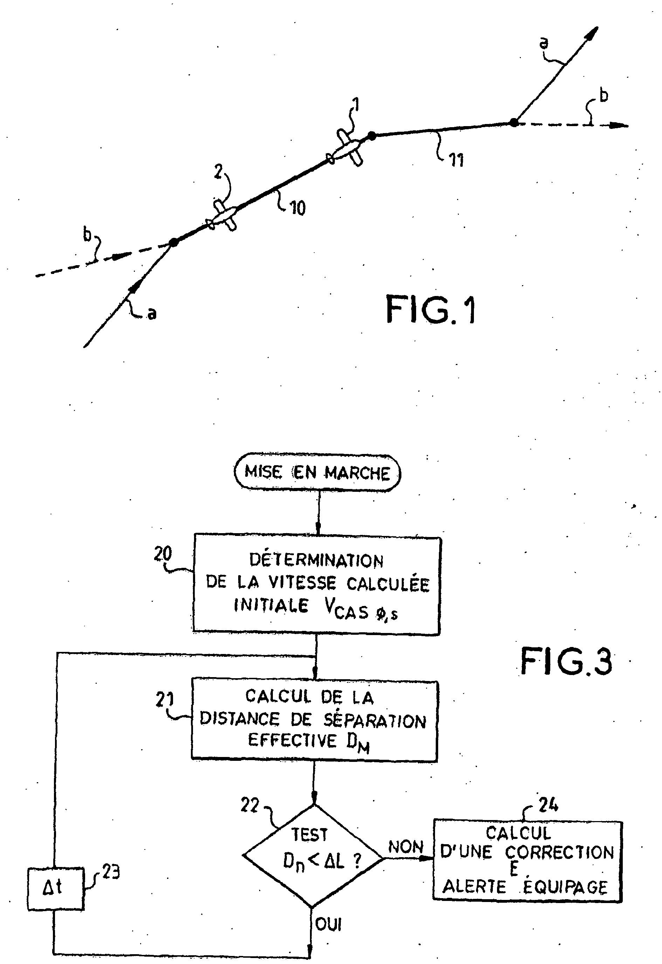

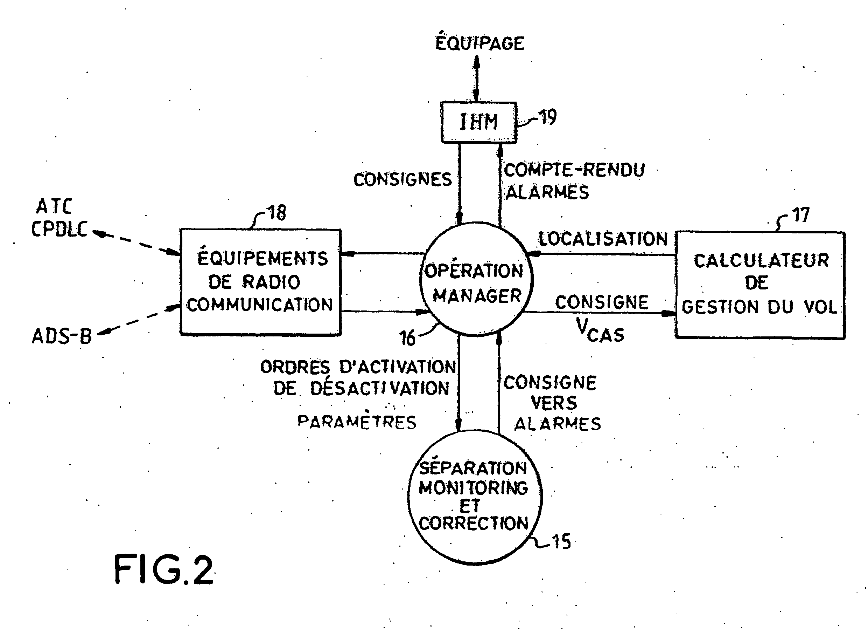

- une figure 1 donne un exemple de trafic où deux aéronefs doivent suivre un tronçon de route commun et où un procédé de guidage selon l'invention est particulièrement utile pour simplifier les tâches des pilotes et contrôleurs aériens,
- une figure 2 illustre une répartition possible de tâches au sein d'un calculateur embarqué à bord de l'aéronef suiveur, pour la mise en oeuvre d'un procédé de guidage selon l'invention, et
- une figure 3 est un organigramme illustrant les principales étapes d'un procédé de guidage selon l'invention.

La figure 1 illustre l'exemple de deux aéronefs 1, 2 suivant deux routes, l'une a, représentée en trait continu, et l'autre b, représentée en traits interrompus, empruntant, dans le même sens un tronçon commun représenté en trait gras et constitué d'un enchaînement de deux couloirs aériens imposés de circulation 10 et 11. Lorsqu'ils arrivent aux tronçons communs 10, 11 les aéronefs 1 et 2 doivent s'incorporer au trafic existant sur ces tronçons sans qu'il y ait de risques de collision et donc respecter une distance minimum de séparation entre eux et les autres aéronefs déjà présents. Ce respect d'une distance minimum de séparation entre aéronefs, au sein d'un couloir aérien de circulation, se fait par une veille visuelle des équipages des aéronefs et par une régulation du trafic par un organisme de contrôle aérien en charge des couloirs aériens concernés, qui donne des consignes de vitesse à chaque avion pour un écoulement régulier du trafic respectant un espacement minimum de sécurité entre chaque aéronef. Du fait de la surveillance visuelle, l'espacement minimum de consigne entre aéronefs est fonction des conditions de visibilité, plus faible par bonne visibilité que par mauvaise visibilité, ce qui joue surtout en phase d'approche d'un terrain d'atterrissage.

L'augmentation de la fiabilité des équipements de navigation des aéronefs et l'apparition de systèmes nouveaux de localisation et de communication, plus performants et plus précis tel que l'ADS-B, permettent actuellement de disposer à bord d'un aéronef d'informations précises et fiables sur sa localisation et son vecteur vitesse ainsi que sur les localisations et les vecteurs vitesse des aéronefs qui évoluent dans son voisinage. Un aéronef ainsi équipé est en mesure de connaître, à tout instant, les distances qui le séparent des autres aéronefs évoluant dans son voisinage et même de faire des prévisions à court et moyen termes sur les évolutions de ces distances pour évaluer les risques de collision. Lorsqu'il forme une file avec d'autres aéronefs au sein d'un couloir aérien imposé, un tel aéronef est en mesure de connaître, à tout instant sa distance avec les aéronefs les plus proches dans la file qui sont celui qui le précède et celui qui le suit. On propose d'utiliser ces informations disponibles à bord d'un aéronef pour le maintien des espacements longitudinaux entre aéronefs empruntant, l'un derrière l'autre, un même couloir aérien.

Plus précisément, on propose un procédé de guidage utilisable à bord d'un aéronef disposant de ce genre d'informations, pour un suivi automatique, à une distance imposée, d'un autre aéronef le précédant sur sa trajectoire. En effet, on peut aboutir au maintien de l'ensemble des espacements longitudinaux séparant les aéronefs parcourant, à la suite, l'un derrière l'autre, un même couloir aérien, par application en chaîne d'un tel procédé de guidage au niveau de chacun des aéronefs en vue de maintenir son espacement longitudinal par rapport à l'aéronef qui le précède immédiatement.

Une telle application en chaîne d'un procédé de guidage permettant à chaque aéronef inséré dans une file d'assurer le maintien de son espacement par rapport à l'aéronef qui le précède laisse la responsabilité de la régulation du trafic dans le couloir aérien à l'autorité du contrôle aérien qui peut intervenir à tout instant, en donnant aux différents aéronefs ses consignes prioritaires de vitesse.

Dans cette application en chaîne d'un tel procédé de guidage, chaque aéronef de la file doit être considéré comme appartenant à deux paires, une paire où il est dit "aéronef esclave" car il met en application le procédé de guidage pour maintenir son espacement par rapport à l'aéronef qui le précède dans la file, et une paire où il est dit "aéronef maître" car il sert de repère à l'aéronef qui le suit dans la file pour la mise en application du procédé de guidage.

Pour la description du procédé de guidage, on s'intéresse à une de ces paires d'aéronefs tels que les aéronefs 1 et 2 parcourant les portions de routes communes 10 et 11 sur la figure 1. L'aéronef 1 qui est le premier sur le parcours et qui sert de repère à l'aéronef 2 est l'aéronef maître. L'aéronef 2 qui est le deuxième sur le parcours et qui doit maintenir son espacement par rapport à l'aéronef 1 qui le précède est l'aéronef esclave. Bien entendu, la figure 1 n'est qu'un exemple de situation, les portions de routes communes 10, 11 pouvant également être des portions d'un couloir imposé pour l'approche d'une piste d'atterrissage.

Ce procédé présente deux phases successives principales : une phase d'initialisation et une phase de d'asservissement.

Au cours de la phase d'initialisation, qui débute une mise en oeuvre du procédé, l'avion esclave 2 prend une valeur initiale de vitesse calculée par rapport à l'air $V_{CAS0,S}$.

La vitesse calculée par rapport à l'air, est une grandeur bien connue en aéronautique souvent désignée sous son appellation anglo-saxonne de "Calculated Air Speed". Elle correspond à la vitesse de l'aéronef par rapport à l'air déduite des mesures de température et de pressions statique et dynamique, par application des lois fondamentales de l'aérodynamique. Cette vitesse calculée par rapport à l'air n'est pas la vitesse vraie par rapport à l'air souvent désignée sous son appellation anglo-saxonne de "True Air Speed" car elle dépend du tarage des capteurs de pressions dynamique et statique qui sont effectués pour une altitude 0 mais elle est liée à la vitesse vraie par rapport à l'air par une loi fonction de l'altitude, de la température et du type d'aéronef et la rejoint dès que l'altitude de l'aéronef s'approche de zéro.

Cette valeur initiale de vitesse calculée par rapport à l'air $V_{CAS0,S}$ peut être soit :

- la vitesse calculée par rapport à l'air prévue lors de la préparation du plan de vol de l'aéronef esclave 2, à l'endroit où il se trouve au moment de la mise en oeuvre du procédé de guidage, cette vitesse calculée par rapport à l'air résultant de l'application d'une loi de définition 4D, c'est-à-dire fonction des quatre variables : altitude, temps, latitude et longitude, ce cas étant adapté au cas d'un aéronef en descente, par exemple en approche d'une piste d'atterrissage,
- une vitesse de croisière calculée par rapport à l'air et adoptée pour optimiser la consommation,
- la vitesse calculée par rapport à l'air de l'aéronef maître 1 au moment où il passait sensiblement au même point de la trajectoire, cette vitesse calculée par rapport à l'air de l'aéronef maître 2 étant déduite d'une estimation du retard ΔT de l'aéronef esclave par rapport à l'aéronef maître et d'une connaissance, par un moyen quelconque, par exemple par un système ADS-B, de la vitesse calculée par rapport à l'air $V_{CAS,M}(t_0)$ de l'aéronef maître 1.

Si $t_0$ est l'instant de début de mise en oeuvre du procédé, la phase d'initialisation peut être définie par la relation :

$$V_{CAS,S}(t_0) = V_{CAS0,S}(t_0)$$

Le procédé se poursuit, après cette phase d'initialisation, par une phase d'asservissement de la vitesse calculée par rapport à l'air $V_{CAS,S}$ de l'aéronef esclave 2, en vue d'amener et de maintenir, avec une plus ou moins grande précision, l'espacement de l'aéronef esclave 2 par rapport à l'aéronef maître 1 sur leur trajectoire commune, à une valeur de consigne.

Au cours de cette phase d'asservissement, l'aéronef esclave 2 qui connaît, à tout instant ou en des instants rapprochés, sa localisation sur la trajectoire qu'il partage avec l'aéronef maître 1, par exemple grâce à ses équipements de navigation de bord, et la localisation de l'avion maître 1 sur leur trajectoire commune, par exemple grâce à un système ADS-L, et qui connaît par ailleurs la forme de leur trajectoire commune, en déduit périodiquement une estimation ou mesure de sa distance effective de séparation $D_M$ par rapport à l'aéronef maître 1 sur leur trajectoire commune ainsi que l'écart de cette distance mesurée de séparation $D_M$ avec une valeur de consigne $D_{SEP}$ et tire, à chaque prise d'écart, un terme de correction E qu'il applique à sa vitesse calculée par rapport à l'air $V_{CAS,S}$ pour diminuer cet écart ou le maintenir dans une plage autorisée.

Si $\Delta t$ est la périodicité de la correction, la phase d'asservissement peut se définir par la relation

$$V_{CAS,S}\left(t_0 + k\Delta t\right) = V_{CAS,S}\left(t_0 + \left(k-1\right)\Delta t\right) + E\left(\left(D_{SEP} - D_M\right),\left(t_0 + \left(k-1\right)\Delta t\right)\right)$$

Le terme de correction $E((D_{SEP} - D_M),(t_0 + (k - 1)\Delta t))$ doit être tel

que la variation qu'il induit sur la vitesse calculée par rapport à l'air $V_{CAS,S}$ de l'aéronef esclave 2 tende à corriger la valeur de l'écart, c'est-à-dire aille dans le sens d'une augmentation de la vitesse calculée par rapport à l'air $V_{CAS,S}$ de l'aéronef esclave 2 si la distance d'espacement mesurée $D_M$ tend à croître au-delà de la valeur minimum de consigne $D_{SEP}$ et dans le sens d'une diminution de la vitesse calculée par rapport à l'air $V_{CAS,S}$ de l'aéronef esclave 2 si la distance d'espacement mesurée $D_M$ tend à passer en dessous de la valeur minimum de consigne $D_{SEP}$, avec une constante de temps d'asservissement de l'ordre de la trentaine de secondes. Il peut par exemple être de la forme :

$$E\left(\left(D_{SEP} - D_M\right),\left(t_0 + \left(k-1\right)\Delta t\right)\right) = S_{EP} \times M \times \left(D_{SEP} - D_M\left(t_0 + \left(k-1\right)\Delta t\right)\right)$$

où M est un coefficient de proportionnalité assurant également une homogénéisation entre distance et vitesse tel que :

$$M = \frac{120kts}{1NM}$$

(kts désignant une vitesse en noeuds et Nm un mile nautique)

et $S_{EP}$ un coefficient binaire prenant une valeur 1 ou 0 et permettant d'introduire une marge de tolérance dite effective $\Delta L_e$, en pour-cent, sur la distance de séparation mesurée $D_M$ par rapport à la valeur de consigne $D_{SEP}$ en deçà de laquelle le terme correctif E prend une valeur nulle et au-delà de laquelle le terme correctif E prend une valeur non nulle :

$$\begin{cases} S_{ep} = 1 & si & \dfrac{\left|\left(D_M - D_{SEP}\right)\right|}{D_{SEP}} \geq \Delta L_e \\[4mm] S_{ep} = 0 & si & \dfrac{\left|\left(D_M - D_{SEP}\right)\right|}{D_{SEP}} < \Delta L_e \end{cases}$$

Cette marge de tolérance effective $\Delta L_e$ permet de bloquer l'asservissement et donc d'éviter des modifications de la vitesse calculée par rapport à l'air de l'aéronef esclave 2, ce qui améliore le confort de ses passagers, tant que sa distance de séparation avec l'aéronef maître 1 reste dans des limites raisonnables. Elle est prise inférieure à la marge d tolérance de consigne $\Delta L_c$ imposée par la réglementation :

$$\Delta L_e = k'\Delta L_c \quad avec \quad 0 < k' \leq 1$$

Dans le même objectif de confort, il est intéressant d'introduire un phénomène d'hystérésis autour de la marge effective de tolérance $\Delta L_e$, en donnant à cette dernière une valeur réduite à chaque détection de son franchissement, et cela, tant que dure le franchissement. Le coefficient binaire $S_{EP}$ est alors défini de la manière suivante :

$$S_{ep} = 1 \quad si \quad \begin{cases} \begin{cases} \dfrac{\left|(D_M - D_{SEP})\right|}{D_{SEP}} > k' \times \Delta L_c' \quad et \quad S_{ep} = 0 \quad \text{au préalable} \\ \text{ou} \\ \dfrac{\left|(D_M - D_{SEP})\right|}{D_{SEP}} > k'' \times \Delta L_c' \quad et \quad S_{ep} = 1 \quad \text{au préalable} \end{cases} \\ \\ et \\ \\ S_{ep} = 0 \quad si \quad \begin{cases} \dfrac{\left|(D_M - D_{SEP})\right|}{D_{SEP}} < k'' \times \Delta L_c \quad et \quad S_{ep} = 1 \quad \text{au préalable} \\ \text{ou} \\ \dfrac{\left|(D_M - D_{SEP})\right|}{D_{SEP}} < k' \times \Delta L_c \quad et \quad S_{ep} = 0 \quad \text{au préalable} \end{cases} \end{cases}$$

avec :

$$0 < k'' < k' \leq 1$$

Le coefficient k', dit de sûreté car il empêche la marge effective de tolérance $\Delta L_e$ d'atteindre la marge de tolérance de consigne $\Delta L_c$, peut être pris égal à 0,8 tandis que le coefficient k" d'hystérésis peut être pris égal à 0,5.

L'élaboration périodique de la correction de vitesse calculée par rapport à l'air $V_{CAS,S}$ de l'aéronef esclave 2, pour maintenir sa distance longitudinale de séparation par rapport à l'aéronef maître 1 dans une plage autorisée implique la connaissance de la distance minimale de séparation de consigne $D_{SEP}$ et celle de la distance effective de séparation $D_M$.

La distance minimale de séparation de consigne $D_{SEP}$ peut être donnée sous une forme explicite, par exemple une distance fixée par un contrôleur aérien assurant la régulation du trafic dans le couloir aérien considéré :

$$D_{SEP} = f(\text{contrôleur})$$

ou sous une forme implicite,
par exemple à partir d'une table de définition prenant en compte l'altitude de l'aéronef esclave 2 :

$$D_{SEP} = f(\text{altitude})$$

ou à partir d'un temps $\Delta T$ de séparation des passages des deux aéronefs par un même point, ce qui nécessite, de la part de l'aéronef esclave 2, une détermination de la valeur de la distance minimale de séparation de consigne $D_{SEP}$ à partir du temps de séparation $\Delta T$ et de sa vitesse vraie par rapport à l'air $V_{TAS,S}$ par la relation :

$$D_{SEP} = \Delta T \times V_{TAS,S}$$

l'aéronef esclave 2 déduisant sa vitesse vraie par rapport à l'air $V_{TAS,S}$, de sa vitesse calculée par rapport à l'air $V_{CAS,S}$,

par une loi fonction de l'altitude et de la température.

La distance effective de séparation D$_M$ est calculée par l'aéronef esclave en tenant compte de sa position et de celle de l'aéronef maître sur la trajectoire qu'ils décrivent en commun. Sa position géographique peut lui être fournie par différents moyens, par exemple ses propres équipements de navigation. Celle de l'aéronef maître peut lui être communiquée au moyen d'un système coopératif de communication tel que l'ADS-B mais elle peut aussi lui être fournie par un système non-coopératif tel qu'un radar de bord ou même par un radar au sol. La forme de la trajectoire parcourue en commun par les aéronefs maître et esclave est une donnée puisqu'il s'agit d'un couloir aérien imposé. Celui-ci est généralement constitué d'une succession de segments rectilignes réunis par des arcs de cercle permettant aux aéronefs de changer de cap entre deux segments rectilignes.

Dans le cas où les deux aéronefs sont sur un même segment rectiligne de leur trajectoire commune, l'aéronef esclave 2 mesure sa distance longitudinale par rapport à l'aéronef maître 1 en considérant que les deux aéronefs sont sur un même grand cercle terrestre et en appliquant la relation :

$$D_M = R \times Arc\cos\left(\cos(Lat_M) \times \cos(Lat_S) \times \cos(Long_M - Long_S) + \sin(Lat_M) \times \sin(Lat_S)\right)$$

$$(1)$$

Lat$_M$ et Long$_M$ définissant la position géographique de l'aéronef maître, Lat$_S$ et Long$_S$ la position géographique de l'aéronef esclave et R étant le rayon de la terre.

Le fait de considérer que les deux aéronefs sont sur un même grand cercle terrestre revient à négliger les différences d'altitudes et à ne prendre en compte que la composante horizontale de la distance de séparation. Cette approximation est acceptable, car elle joue dans un sens de sous-estimation de la distance apparente séparant les deux aéronefs et ne va pas à l'encontre de la sécurité.

Dans le cas où les deux aéronefs ne sont pas sur une même portion rectiligne de leur trajectoire commune mais sur deux portions rectilignes séparées par un virage, l'aéronef esclave 1 mesure sa distance par rapport à l'aéronef maître 2 en plusieurs étapes.

Il mesure la distance qui le sépare de la fin du segment rectiligne où il se trouve par application de la relation (1) en remplaçant dans cette dernière, la position géographique de l'aéronef maître 1 par celle du point d'extrémité du segment rectiligne où il se trouve.

Il calcule la longueur du virage par la relation :

$$L = r(\chi_s - \chi_P) \qquad (2)$$

$\chi_P$ et $\chi_S$ étant les caps exprimés en radians, des deux segments rectilignes réunis par le virage et r le rayon du virage.

Il mesure la distance qui sépare l'aéronef maître 1 du début du segment rectiligne où il se trouve par application de la relation (1), en remplaçant dans cette dernière, sa position géographique par celle du point d'origine du segment rectiligne parcouru par l'aéronef maître.

Il additionne en fin toutes les distances obtenues, ce qui lui donne sa distance de séparation longitudinale par rapport à l'aéronef maître.

Si les deux aéronefs ne se trouvent plus sur un même segment rectiligne, l'un y étant, mais l'autre étant en virage, avant ou après ce segment rectiligne, l'aéronef esclave 2 calcule sa distance de séparation longitudinale par rapport à l'aéronef maître 1 d'une manière analogue à la précédente pour la portion de segment rectiligne à parcourir ou restant à parcourir par l'un des deux aéronefs. Par contre, pour la longueur du virage restant à finir ou déjà entamé, il utilise la relation (2) en remplaçant dans cette dernière, le cap du segment rectiligne quitté ou non encore atteint par l'angle $\chi$ en radians entre le nord et la droite passant par le centre du virage et la position de l'aéronef en virage, obtenu par la relation

$$\chi = \arctan\left(\frac{(long1 - long0) \times \dfrac{\cos(lat1 - lat0)}{2}}{lat1 - lat0}\right)$$

lat1, long1 étant les coordonnées de l'aéronef et lat0, long0 celles du centre du virage.

La figure 2 illustre une organisation logicielle permettant la mise en oeuvre du procédé de guidage qui vient d'être décrit, par un calculateur embarqué pouvant exécuter par ailleurs, d'autres tâches participant à la gestion du vol. Cette organisation logicielle, est à base de deux couches logicielles, l'une inférieure 15 dite "Separation Monitoring and Correction" et l'autre supérieure 16 dite "Operation Manager".

La couche logicielle inférieure "Separation Monitoring and Correction" 15 assure l'exécution des différentes étapes du procédé de guidage :

- détermination de la valeur initiale de la vitesse calculée par rapport à l'air si elle n'est pas disponible explicitement,
- mise à jour et détermination de la distance minimum de séparation de consigne si celle-ci n'est pas explicite,
- mesure périodique de la distance longitudinale de séparation avec l'aéronef maître,
- détermination de l'écart existant entre la distance longitudinale mesurée et la distance minimum de séparation de consigne,
- élaboration d'une correction de la vitesse calculée par rapport à l'air pour maintenir l'écart dans une plage autorisée, et
- émission d'alarme éventuelle en cas de non-respect de la distance minimum de consigne.

La couche supérieure 16 "Operation Manager" assure le dialogue de la couche logicielle inférieure 10 "Separation Monitoring and Correction" avec les équipements de l'aéronef : calculateur de gestion du vol 17 pour le suivi des corrections de la vitesse calculée par rapport à l'air, appareil de radiocommunication 18 pour la surveillance du trafic de voisinage (ADS-B) et pour l'échange d'information de trafic avec le réseau ATC, équipement IHM 19 faisant l'interface avec l'équipage, etc. Elle détecte une demande de prise en charge par l'aéronef du respect d'une distance minimum de séparation par rapport à un autre aéronef désigné, émanant soit de l'équipage par l'intermédiaire de l'équipements IHM 19, soit d'une autorité de contrôle du trafic aérien qui envoie sa demande depuis un centre de contrôle aérien ATC, par l'intermédiaire du canal CPDLC de l'anglo-saxon "Control Pilot Data Link Communication". Elle fait alors exécuter cette demande par la couche logicielle inférieure "Separation Monitoring and Correction" en lui fournissant les informations nécessaires, que ces informations proviennent des équipements de navigation de l'aéronef ou de l'environnement de l'aéronef par l'intermédiaire des équipements de radiocommunication 18 de l'aéronef ainsi que les interfaces nécessaires avec les autres équipements de l'aéronef. Elle détecte également les ordres d'interruption de la prise en charge par l'aéronef du respect d'une distance minimum avec un autre aéronef et transmet à l'équipage un compte-rendu d'exécution et toute alarme liée au non-respect de la distance minimum.

La figure 3 est un organigramme illustrant les principales étapes du procédé de guidage telles qu'elles sont mises en oeuvre par la couche logicielle inférieure "Separation Monitoring and Correction" 15. Sur un ordre de la couche logicielle supérieure "Operation Manager" 16, la couche logicielle inférieure "Separation Monitoring and Correction" 15 initialise le procédé de guidage en 20, en choisissant la valeur initiale adoptée pour la vitesse calculée par rapport à l'air de l'aéronef $V_{CAS0,S}$ qui est transmise comme consigne au calculateur de gestion du vol par la couche logicielle supérieure "Operation Manager" 16. Elle calcule en 21, la distance $D_M$ séparant l'aéronef de celui choisi pour aéronef maître, teste en 22 si cette distance de séparation $D_M$ entre dans une fourchette de tolérance $\Delta L$ admise par rapport à une valeur de consigne $D_{SEP}$ éventuellement fonction de l'altitude ou d'un intervalle de temps de séparation par rapport à l'aéronef maître et, selon les résultats du test, soit, si la fourchette est respectée, ne fait rien et déclenche une minuterie 23 avant de repartir à l'étape 21, au niveau du calcul de la distance $D_M$, soit, constate que la fourchette n'est pas respectée et élabore en 24 un terme de correction de la vitesse calculée par rapport à l'air de l'aéronef pour ramener sa distance de séparation dans la fourchette de tolérance admise en alertant l'équipage d'une modification de consigne de vitesse calculée par rapport à l'air au calculateur de gestion du vol.

## Revendications

1. Procédé de guidage d'un aéronef dit esclave (2) dans le cadre d'un vol en convoi, derrière un autre aéronef dit maître (1), sur une même trajectoire prédéterminée et avec une distance minimum de séparation de consigne $D_{SEP}$, consistant à donner à la vitesse calculée par rapport à l'air $V_{CAS,S}$ de l'aéronef esclave une valeur initiale $V_{CAS0,S}$, à déduire périodiquement, la distance séparant l'aéronef esclave (2) de l'aéronef maître (1) de la position géographique de l'aéronef esclave (2) et de celle de l'aéronef maître (1) en un même instant et de la forme connue de la trajectoire suivie par les aéronefs maître (1) et esclave (2), puis à corriger périodiquement la vitesse calculée par rapport à l'air $V_{CAS,S}$ de l'aéronef esclave en la modifiant avec un terme correctif E tiré de l'écart constaté entre la distance de séparation mesurée $D_M$ et la distance minimum de séparation de consigne $D_{SEP}$, conformément à une relation de récurrence de la forme :

$$\begin{cases} V_{CAS,S}(t_0) = V_{CAS0,S}(t_0) \\ V_{CAS,S}(t_0 + k\Delta t) = V_{CAS,S}(t_0 + (k-1)\Delta t) + E\big((D_{SEP} - D_M), (t_0 + (k-1)\Delta t)\big) \end{cases}$$

$\Delta t$ étant la périodicité de la correction, $D_M(t_0+(k-1)\Delta t)$ la distance de séparation mesurée à l'instant $(t_0+(k-1)\Delta t)$, ledit procédé étant **caractérisé en ce que** l'on se donne une marge de tolérance $\Delta L$ sur la valeur de l'écart entre la distance mesurée $D_M$ et la distance de consigne $D_{SEP}$ considérée relativement à la distance de consigne $D_{SEP}$ en deçà de laquelle le terme correctif E prend une valeur nulle et au-delà de laquelle le terme correctif prend une valeur proportionnelle à l'écart constaté entre la distance de séparation mesurée $D_M$ et la distance minimum de séparation de consigne $D_{SEP}$.

2. Procédé selon la revendication 1, **caractérisé en ce que** la valeur initiale de la vitesse calculée par rapport à l'air de l'aéronef esclave (2) est prise égale à la vitesse calculée par rapport à l'air prévue lors de la préparation du plan de vol de l'aéronef esclave (2), à l'endroit où il se trouve au moment de la mise en oeuvre du procédé de guidage, cette vitesse calculée par rapport à l'air résultant de l'application d'une loi de définition 4D fonction des quatre variables ; altitude, temps, latitude et longitude.

3. Procédé selon la revendication 1, **caractérisé en ce que** la valeur initiale de la vitesse calculée par rapport à l'air de l'aéronef esclave (2) est prise égale à une vitesse calculée par rapport à l'air adoptée en croisière par l'aéronef esclave (2).

4. Procédé selon la revendication 1, **caractérisé en ce que** la valeur initiale de la vitesse calculée par rapport à l'air de l'aéronef esclave (2) est prise égale à la vitesse calculée par rapport à l'air de l'aéronef maître (1) au moment où il passait sensiblement au même point de la trajectoire.

5. Procédé selon la revendication 1, **caractérisé en ce que** l'on introduit un phénomène d'hystérésis autour de la marge de tolérance $\Delta L_e$, en donnant à cette dernière une valeur réduite à chaque détection de son franchissement, et cela, tant que dure le franchissement.

6. Procédé selon la revendication 1, **caractérisé en ce que**, dans le cas où il existe une marge de tolérance de consigne $\Delta L_c$, on adopte une marge de tolérance $\Delta L_e$ plus sévère que la marge de tolérance de consigne $\Delta L_c$ en appliquant à la marge de tolérance de consigne $\Delta L_c$ un coefficient de sécurité k' positif et inférieur à 1 :

$$\Delta L_e = k' \Delta L_c \quad avec \quad 0 < k' \le 1$$

7. Procédé selon la revendication 6, **caractérisé en ce que** le coefficient de sécurité k' est pris égal à 0,8.

8. Procédé selon la revendication 6, **caractérisé en ce que** l'on introduit un phénomène d'hystérésis autour de la marge de tolérance $\Delta L_e$ en donnant à cette dernière, lorsqu'elle vient d'être franchie et tant qu'elle est franchie, une valeur réduite déduite de la marge de tolérance de consigne $\Delta L_c$ par application d'un coefficient d'hystérésis k" positif et inférieur au coefficient de sécurité k'.

9. Procédé selon la revendication 8, **caractérisé en ce que** le coefficient d'hystérésis k" est pris égal à :

$$k" = \frac{1}{2k'}$$

k' étant le coefficient de sécurité.

10. Procédé selon la revendication 1, **caractérisé en ce que** le terme correctif E est pris proportionnel à l'écart constaté entre la distance de séparation mesurée $D_M$ et la distance minimum de séparation de consigne $D_{SEP}$ avec un coefficient de proportionnalité p pris égal à :

$$p = S_{ep} \times M$$

avec:

$$S_{ep} = 1 \quad si \quad \begin{cases} \dfrac{\lfloor (D_M - D_{SEP}) \rfloor}{D_{SEP}} > k' \times \Delta L_c' \quad et \quad S_{ep} = 0 \quad \text{au préalable} \\ ou \\ \dfrac{\lfloor (D_M - D_{SEP}) \rfloor}{D_{SEP}} > k'' \times \Delta L_c' \quad et \quad S_{ep} = 1 \quad \text{au préalable} \end{cases}$$

$$et$$

$$S_{ep} = 0 \quad si \quad \begin{cases} \dfrac{\lfloor (D_M - D_{SEP}) \rfloor}{D_{SEP}} < k'' \times \Delta L_c \quad et \quad S_{ep} = 1 \quad \text{au préalable} \\ ou \\ \dfrac{\lfloor (D_M - D_{SEP}) \rfloor}{D_{SEP}} < k' \times \Delta L_c \quad et \quad S_{ep} = 0 \quad \text{au préalable} \end{cases}$$

$\Delta L_c$ étant un pourcentage de tolérance de consigne, k' un coefficient de sécurité positif inférieur à l'unité, k" un coefficient d'hystérésis et M un coefficient d'homogénéisation de la distance par rapport à la vitesse.

**11.** Procédé selon la revendication 10, **caractérisé en ce que** le coefficient M d'homogénéisation est pris égal à :

$$M = \frac{120 kts}{1 NM}$$

**12.** Procédé selon la revendication 1, **caractérisé en ce que** la distance de séparation mesurée $D_M$ est la composante horizontale de la distance de séparation vraie.

**13.** Procédé selon la revendication 1, **caractérisé en ce que** la distance de séparation mesurée $D_M$ séparant à un instant donné, l'aéronef esclave (2) de l'aéronef maître (1) sur une trajectoire rectiligne, est tirée des localisations des aéronefs maître (1) et esclave (2) au moyen de la relation :

$$D_M = R \times Arc\cos\left(\cos(Lat_M) \times \cos(Lat_S) \times \cos(Long_M - Long_S) + \sin(Lat_M) \times \sin(Lat_S)\right)$$

$Lat_M$ et $Long_M$ définissant la position géographique de l'aéronef maître, $Lat_S$ et $Long_S$ la position géographique de l'aéronef esclave et R étant le rayon de la terre.

**14.** Procédé selon la revendication 1, **caractérisé en ce que** la distance de séparation mesurée $D_M$ séparant à un instant donné, l'aéronef esclave (2) de l'aéronef maître (1) alors que l'aéronef esclave (2) se trouve sur une partie rectiligne, de cap $\chi_P$, de la trajectoire suivie par les deux aéronefs, et l'avion maître (1) sur une autre partie rectiligne, de cap $\chi_S$ de cette trajectoire, raccordées l'une à l'autre par un arc de cercle de rayon r, débutant en un point $P_1$ marquant la fin de la partie rectiligne de trajectoire parcourue par l'aéronef esclave et se terminant en un point $P_2$

marquant le début de la partie rectiligne de trajectoire parcourue par l'aéronef maître, est prise égale à la somme des distances séparant l'aéronef esclave du point $P_1$ et le point $P_2$ de l'aéronef maître augmentées de la longueur L de l'arc de cercle prise égale à :

$$L = r(\chi_s - \chi_P)$$

les caps $\chi_P$ et $\chi_S$ étant exprimés en radians.

**15.** Procédé selon la revendication 1, **caractérisé en ce que** la distance de consigne de séparation $D_{SEP}$ est déduite d'une consigne de délai minimum $\Delta T$ entre les passages des deux aéronefs (1, 2) par un même point de la trajectoire par application de la relation :

$$D_{SEP} = \Delta T \times V_{TAS,S}$$

$V_{TAS,S}$ étant la vraie vitesse dans l'air de l'aéronef esclave.

**16.** Procédé selon la revendication 1, **caractérisé en ce que** la distance de consigne de séparation $D_{SEP}$ est tirée d'une table la donnant en fonction de l'altitude.

**17.** Procédé selon la revendication 1, **caractérisé en ce que** la distance de consigne de séparation $D_{SEP}$ est une consigne de distance donnée par un contrôleur aérien.

**18.** Procédé selon la revendication 1, **caractérisé en ce que** la localisation de l'aéronef maître (1) est transmise de manière coopérative par ce dernier à l'aéronef esclave (2) au moyen d'un système tel que l'ADS-B.

**19.** Procédé selon la revendication 1, **caractérisé en ce que** l'aéronef esclave (2) acquiert la localisation de l'aéronef maître (1) au moyen d'un radar embarqué.

**20.** Procédé selon la revendication 1, **caractérisé en ce que** l'aéronef esclave acquiert la localisation de l'aéronef maître d'une station de localisation au sol.

**Claims**

**1.** Process for guiding a so-called slave aircraft (2) in the context of a convoy flight, behind another so-called master aircraft (1), on one and the same predetermined trajectory and with a preset minimum separation distance $D_{SEP}$, consisting in giving the calculated air speed $V_{CAS,S}$ of the slave aircraft an initial value $V_{CAS0,S}$, in periodically deducing the distance separating the slave aircraft (2) from the master aircraft (1) from the geographical position of the slave aircraft (2) and from that of the master aircraft (1) at one and the same instant, and from the known shape of the trajectory followed by the master (1) and slave (2) aircraft, then in periodically correcting the calculated air speed $V_{CAS,S}$ of the slave aircraft by modifying it with a corrective term E derived from the discrepancy noted between the measured separation distance $D_H$ and the preset minimum separation distance $D_{SEP}$, in accordance with a recurrence relation of the form:

$$\begin{cases} V_{CAS,S}(t_0) = V_{CAS0,S}(t_0) \\ V_{CAS,S}(t_0 + k\Delta t) = V_{CAS,S}(t_0 + (k-1)\Delta t) + E((D_{SEP} - D_M), (t_0 + (k-1)\Delta t)) \end{cases}$$

$\Delta t$ being the periodicity of the correction, $D_M(t_0+(k-1)\Delta t)$ the separation distance measured at the instant $(t_0+(k-1)\Delta t)$, the said process being **characterized in that** one is given a margin of tolerance $\Delta L$ on the value of the deviation between the measured distance $D_M$ and the preset distance $D_{SEP}$ considered in relation to the preset distance $D_{SEP}$ below which the corrective term E takes a non-zero value and above which the corrective term takes a value proportional to the deviation noted between the measured separation distance $D_M$ and the minimum preset separation distance $D_{SEP}$.

2. Process according to Claim 1, **characterized in that** the initial value of the calculated air speed of the slave aircraft (2) is taken equal to the calculated air speed scheduled during the preparation of the flight plan of the slave aircraft (2) at the place where it is situated at the moment of implementation of the guidance process, this calculated air speed resulting from the application of a 4D defining law dependent on the four variables: altitude, time, latitude and longitude.

3. Process according to Claim 1, **characterized in that** the initial value of the calculated air speed of the slave aircraft (2) is taken equal to a calculated air speed adopted by the slave aircraft (2) when cruising.

4. Process according to Claim 1, **characterized in that** the initial value of the calculated air speed of the slave aircraft (2) is taken equal to the calculated air speed of the master aircraft (1) at the moment at which it passed substantially the same point of the trajectory.

5. Process according to Claim 1, **characterized in that** a hysteresis phenomenon is introduced around the margin of tolerance $\Delta L_e$, by giving the latter a reduced value upon each detection of its overshoot, doing so as long as the overshoot lasts.

6. Process according to Claim 1, **characterized in that**, in the case where there is a preset margin of tolerance $\Delta L_c$, a tolerance margin $\Delta L_e$ which is stricter than the preset tolerance margin $\Delta L_c$ is adopted by applying a positive safety coefficient k' of less than 1 to the preset tolerance margin $\Delta L_c$:

$$\Delta L_e = k'\Delta L_c \quad \text{with} \quad 0 < k' \leq 1$$

7. Process according to Claim 6, **characterized in that** the safety coefficient k' is taken equal to 0.8.

8. Process according to Claim 6, **characterized in that** a hysteresis phenomenon is introduced around the tolerance margin $\Delta L_e$ by giving the latter, when it has just been overshot and for as long as it is overshot, a reduced value deduced from the preset tolerance margin $\Delta L_c$ by applying a positive hysteresis coefficient k" of less than the safety coefficient k'.

9. Process according to Claim 8, **characterized in that** the hysteresis coefficient k" is taken equal to:

$$k'' = \frac{1}{2k^1}$$

$k^1$ being the safety coefficient.

10. Process according to Claim 1, **characterized in that** the corrective term E is taken proportional to the discrepancy noted between the measured separation distance $D_H$ and the preset minimum separation distance $D_{SEP}$ with a coefficient of proportionality p taken equal to:

$$p = S_{ep} \times M$$

with:

$$S_{ep} = 1 \quad \text{if} \quad \begin{cases} \begin{cases} \dfrac{\left|\left(D_M - D_{SEP}\right)\right|}{D_{SEP}} > k' \times \Delta L_c \ \text{ and } \ S_{ep} = 0 \quad \text{a priori} \\ \\ \text{or} \\ \\ \dfrac{\left|\left(D_M - D_{SEP}\right)\right|}{D_{SEP}} > k'' \times \Delta L_c \ \text{ and } \ S_{ep} = 1 \quad \text{a priori} \end{cases} \\ \\ \text{and} \\ \\ S_{ep} = 0 \quad \text{if} \quad \begin{cases} \dfrac{\left|\left(D_M - D_{SEP}\right)\right|}{D_{SEP}} < k'' \times \Delta L_c \ \text{ and } \ S_{ep} = 1 \quad \text{a priori} \\ \\ \text{or} \\ \\ \dfrac{\left|\left(D_M - D_{SEP}\right)\right|}{D_{SEP}} < k' \times \Delta L_c \ \text{ and } \ S_{ep} = 0 \quad \text{a priori} \end{cases} \end{cases}$$

$\Delta L_c$ being a preset tolerance percentage, k' a positive safety coefficient less than one, k" a hysteresis coefficient and M a consistency coefficient for making the distance homogeneous in relation to the speed.

**11.** Process according to Claim 10, **characterized in that** the consistency coefficient M is taken equal to:

$$M = \frac{120kts}{1NM}$$

**12.** Process according to Claim 1, **characterized in that** the measured separation distance $D_M$ is the horizontal component of the true separation distance.

**13.** Process according to Claim 1, **characterized in that** the measured separation distance $D_M$ separating, at a given instant, the slave aircraft (2) from the master aircraft (1) on a rectilinear trajectory, is derived from the locations of the master (1) and slave (2) aircraft by means of the relation:

$$D_M = R \times Arc\cos\left(\cos\left(Lat_M\right) \times \cos\left(Lat_S\right) \times \cos\left(Long_M - Long_S\right) + \sin\left(Lat_M\right) \times \sin\left(Lat_S\right)\right)$$

$Lat_M$ and $Long_M$ defining the geographical position of the master aircraft, $Lat_S$ and $Long_S$ the geographical position of the slave aircraft and R being the radius of the earth.

**14.** Process according to Claim 1, **characterized in that** the measured separation distance $D_M$ separating, at a given instant, the slave aircraft (2) from the master aircraft (1) while the slave aircraft (2) is situated on a rectilinear part, with heading $\chi_P$, of the trajectory followed by the two aircraft, and the master airplane (1) on another rectilinear part, with heading $\chi_S$, of this trajectory, which are joined together by an arc of a circle of radius r, starting at a point $P_1$ marking the end of the rectilinear trajectory part traversed by the slave aircraft and terminating at a point $P_2$ marking the start of the rectilinear trajectory part traversed by the master aircraft, is taken equal to the sum of the distances separating the slave aircraft from the point $P_1$ and the point $P_2$ from the master aircraft plus the length L of the circular arc taken equal to:

$$L = r(\chi_s - \chi_P)$$

the headings $\chi_P$ and $\chi_S$ being expressed in radians.

**15.** Process according to Claim 1, **characterized in that** the separation preset distance $D_{SEP}$ is deduced from a minimum timespan preset $\Delta T$ between the passings of the two aircraft (1, 2) through one and the same point of the trajectory by applying the relation:

$$D_{SEP} = \Delta T \times V_{TAS,S}$$

$V_{TAS,S}$ being the true speed of the slave aircraft in the air.

**16.** Process according to Claim 1, **characterized in that** the separation preset distance $D_{SEP}$ is derived from a table giving it as a function of altitude.

**17.** Process according to Claim 1, **characterized in that** the separation preset distance $D_{SEP}$ is a distance preset given by an air controller.

**18.** Process according to Claim 1, **characterized in that** the location of the master aircraft (1) is transmitted in a cooperative manner by the latter to the slave aircraft (2) by means of a system such as ADS-B.

**19.** Process according to Claim 1, **characterized in that** the slave aircraft (2) acquires the location of the master aircraft (1) by means of an onboard radar.

**20.** Process according to Claim 1, **characterized in that** the slave aircraft acquires the location of the master aircraft from a ground-based locating station.

**Patentansprüche**

**1.** Verfahren zur Führung eines "Folge"-Luftfahrzeugs (2) im Rahmen eines Konvoi-Flugs hinter einem anderen, "Leit"-Luftfahrzeug (1) auf der gleichen vorbestimmten Flugbahn und mit einem Mindest-Sollabstand $D_{SEP}$, das darin besteht, der bezüglich der Luft berechneten Geschwindigkeit $V_{CAS,S}$ des Folge-Luftfahrzeugs einen Ausgangswert $V_{CAS0,S}$ zu verleihen, periodisch den das Folge-Luftfahrzeug (2) vom Leit-Luftfahrzeug (1) trennenden Abstand von der geographischen Position des Folge-Luftfahrzeugs (2) und von derjenigen des Leit-Luftfahrzeugs (1) im gleichen Zeitpunkt und von der bekannten Form der vom Leit-Luftfahrzeug (1) und vom Folge-Luftfahrzeug (2) verfolgten Flugbahn abzuleiten, und dann periodisch die bezüglich der Luft berechnete Geschwindigkeit $V_{CAS,S}$ des Folge-Luftfahrzeugs zu korrigieren, indem sie durch einen Korrekturterm E verändert wird, der aus der Abweichung entnommen wird, die zwischen dem gemessenen Abstand $D_M$ und dem Mindest-Sollabstand $D_{SEP}$ festgestellt wurde, gemäß einer Rekurrenzbeziehung folgender Form:

$$\begin{cases} V_{CAS,S}(t_0) = V_{CAS0,S}(t_0) \\ V_{CAS,S}(t_0 + k\Delta t) = V_{CAS,S}(t_0 + (k-1)\Delta t) + E((D_{SEP} - D_M),(t_0 + (k-1)\Delta t)) \end{cases}$$

wobei $\Delta t$ die Periodizität der Korrektur, $D_M(t_0+(k-1)\Delta t)$ der im Zeitpunkt $(t_0+(k-1)\Delta t)$ gemessene Abstand ist,
wobei das Verfahren **dadurch gekennzeichnet ist, dass** ein Toleranzbereich $\Delta L$ für den Wert der Abweichung zwischen dem gemessenen Abstand $D_M$ und dem berücksichtigten Sollabstand $D_{SEP}$ bezüglich des Sollabstands

$D_{SEP}$ vorgesehen wird, innerhalb dessen der Korrekturterm E einen Wert Null annimmt, und außerhalb dessen der Korrekturterm einen Wert proportional zur festgestellten Abweichung zwischen dem gemessenen Abstand $D_M$ und dem Mindest-Sollabstand $D_{SEP}$ annimmt.

2. Verfahren nach Anspruch 1, **dadurch gekennzeichnet, dass** der Ausgangswert der bezüglich der Luft berechneten Geschwindigkeit des Folge-Luftfahrzeugs (2) gleich der bezüglich der Luft berechneten Geschwindigkeit genommen wird, die bei der Vorbereitung des Flugplans des Folge-Luftfahrzeugs (2) an der Stelle vorgesehen wird, wo es sich zum Zeitpunkt der Anwendung des Führungsverfahrens befindet, wobei diese bezüglich der Luft berechnete Geschwindigkeit aus der Anwendung eines Definitionsgesetzes 4D in Abhängigkeit von den vier Variablen: Höhe, Zeit, Breitengrad und Längengrad resultiert.

3. Verfahren nach Anspruch 1, **dadurch gekennzeichnet, dass** der Ausgangswert der bezüglich der Luft berechneten Geschwindigkeit des Folge-Luftfahrzeugs (2) gleich einer bezüglich der Luft berechneten Geschwindigkeit genommen wird, mit der Folge-Luftfahrzeug (2) im Reiseflug fliegt.

4. Verfahren nach Anspruch 1, **dadurch gekennzeichnet, dass** der Ausgangswert der bezüglich der Luft berechneten Geschwindigkeit des Folge-Luftfahrzeugs (2) gleich der bezüglich der Luft berechneten Geschwindigkeit des Leit-Luftfahrzeugs (1) in dem Moment genommen wird, in dem es im Wesentlichen den gleichen Punkt der Flugbahn durchquert hat.

5. Verfahren nach Anspruch 1, **dadurch gekennzeichnet, dass** ein Hysteresephänomen um den Toleranzbereich $\Delta L_e$ herum eingeführt wird, indem letzterem bei jeder Erfassung seiner Überschreitung ein reduzierter Wert verliehen wird, und dies, so lange die Überschreitung dauert.

6. Verfahren nach Anspruch 1, **dadurch gekennzeichnet, dass**, wenn es einen Solltoleranzbereich $\Delta L_c$ gibt, ein strengerer Toleranzbereich $\Delta L_e$ genommen wird als der Solltoleranzbereich $\Delta L_c$, indem an den Solltoleranzbereich $\Delta L_c$ ein positiver Sicherheitskoeffizient k' niedriger als 1 angewendet wird:

$$\Delta L_e = k'\Delta L_c \text{ mit } 0 < k' \leq 1$$

7. Verfahren nach Anspruch 6, **dadurch gekennzeichnet, dass** der Sicherheitskoeffizient k' gleich 0,8 genommen wird.

8. Verfahren nach Anspruch 6, **dadurch gekennzeichnet, dass** ein Hysteresephänomen um den Toleranzbereich $\Delta L_e$ herum eingeführt wird, indem diesem letzteren, wenn er überschritten wurde, und so lange er überschritten wird, ein reduzierten Wert verliehen wird, der vom Solltoleranzbereich $\Delta L_c$ durch Anwendung eines positiven Hysteresekoeffizienten k" kleiner als der Sicherheitskoeffizient k' abgeleitet wird.

9. Verfahren nach Anspruch 8, **dadurch gekennzeichnet, dass** der Hysteresekoeffizient k" gleich

$$k" = \frac{1}{2k'}$$

genommen wird, wobei k' der Sicherheitskoeffizient ist.

10. Verfahren nach Anspruch 1, **dadurch gekennzeichnet, dass** der Korrekturterm E proportional zur festgestellten Abweichung zwischen dem gemessenen Abstand $D_M$ und dem Mindest-Sollabstand $D_{SEP}$ mit einem Proportionalitätskoeffizienten p genommen wird, der entspricht:

$$p = S_{ep} \text{ x } M$$

mit:

$$S_{ep} = 1 \text{ wenn } \begin{cases} \begin{cases} \dfrac{\lfloor(D_M - D_{SEP})\rfloor}{D_{SEP}} > k' \, x\Delta L_c \text{ und } S_{ep} = 0 \text{ vorher} \\ \text{oder} \\ \dfrac{\lfloor(D_M - D_{SEP})\rfloor}{D_{SEP}} > k'' \, x\Delta L_c \text{ und } S_{ep} = 1 \text{ vorher} \end{cases} \\ \text{und} \\ S_{ep} = 0 \text{ wenn } \begin{cases} \dfrac{\lfloor(D_M - D_{SEP})\rfloor}{D_{SEP}} < k'' \, x\Delta L_c \text{ und } S_{ep} = 1 \text{ vorher} \\ \text{oder} \\ \dfrac{\lfloor(D_M - D_{SEP})\rfloor}{D_{SEP}} < k' \, x\Delta L_c \text{ und } S_{ep} = 0 \text{ vorher} \end{cases} \end{cases}$$

wobei $\Delta L_c$ ein Solltoleranz-Prozentsatz, k' ein positiver Sicherheitskoeffizient kleiner als Eins, k'' ein Hysteresekoeffizient und M ein Homogenisierungskoeffizient des Abstands bezüglich der Geschwindigkeit ist.

11. Verfahren nach Anspruch 10, **dadurch gekennzeichnet, dass** der Homogenisierungskoeffizient M gleich:

$$M = \frac{120\text{kts}}{1\text{NM}}$$

genommen wird.

12. Verfahren nach Anspruch 1, **dadurch gekennzeichnet, dass** der gemessene Abstand $D_M$ die waagrechte Komponente des wahren Abstands ist.

13. Verfahren nach Anspruch 1, **dadurch gekennzeichnet, dass** der gemessene Abstand $D_M$, der in einem gegebenen Zeitpunkt das Folge-Luftfahrzeug (2) vom Leit-Luftfahrzeug (1) auf einer geradlinigen Flugbahn trennt, aus den Lokalisierungen des Leit-Luftfahrzeugs (1) und des Folge-Luftfahrzeugs (2) mit Hilfe folgender Beziehung entnommen wird:

$$D_M = \text{RxArccos}(\cos(\text{Lat}_M)\text{xcos}(\text{Lat}_S)\text{xcos}(\text{Long}_M-\text{Long}_S)+\sin(\text{Lat}_M)\text{xsin}(\text{Lat}_S))$$

wobei $\text{Lat}_M$ und $\text{Long}_M$ die geographische Position des Leit-Luftfahrzeugs, $\text{Lat}_S$ und $\text{Long}_S$ die geographische Position des Folge-Luftfahrzeugs definieren und R der Radius der Erde ist.

14. Verfahren nach Anspruch 1, **dadurch gekennzeichnet, dass** der gemessene Abstand $D_M$, der in einem gegebenen Zeitpunkt das Folge-Luftfahrzeug (2) vom Leit-Luftfahrzeug (1) trennt, während das Folge-Luftfahrzeug (2) sich in einem geradlinigen Bereich mit dem Kurs $X_P$ der von den beiden Luftfahrzeugen verfolgten Flugbahn und das Leit-Luftfahrzeug (1) sich in einem anderen geradlinigen Bereich mit dem Kurs $X_S$ dieser Flugbahn befindet, die miteinander durch einen Kreisbogen mit dem Radius r verbunden sind, der in einem Punkt $P_1$ beginnt, der das Ende des geradlinigen Flugbahnbereichs markiert, der vom Folge-Luftfahrzeug durchflogen wird, und in einem Punkt $P_2$ endet, der den Beginn des geradlinigen Flugbahnbereichs markiert, der vom Leit-Luftfahrzeug durchflogen wird, gleich der Summe der Abstände genommen wird, die das Folge-Luftfahrzeug vom Punkt $P_1$ und den Punkt $P_2$ vom Leit-Luftfahrzeug trennen, erhöht um die Länge L des Kreisbogens, die gleich:

$$L = r(X_s \quad X_p)$$

genommen wird, wobei die Kursrichtungen $X_P$ und $X_S$ in Radian ausgedrückt werden.

15. Verfahren nach Anspruch 1, **dadurch gekennzeichnet, dass** der Sollabstand $D_{SEP}$ von einem Sollwert einer Mindestverzögerung $\Delta T$ zwischen den Durchgängen der beiden Luftfahrzeuge (1, 2) durch den gleichen Punkt der Flugbahn durch Anwendung der Beziehung:

$$D_{SEP} = \Delta T x V_{TAS,S}$$

abgeleitet wird, wobei $V_{TAS,S}$ die wahre Geschwindigkeit des Folge-Luftfahrzeugs in der Luft ist.

16. Verfahren nach Anspruch 1, **dadurch gekennzeichnet, dass** der Sollabstand $D_{SEP}$ aus einer Tabelle entnommen wird, die ihn in Abhängigkeit von der Höhe angibt.

17. Verfahren nach Anspruch 1, **dadurch gekennzeichnet, dass** der Sollabstand $D_{SEP}$ ein Abstandssollwert ist, der von einem Fluglotsen vorgegeben wird.

18. Verfahren nach Anspruch 1, **dadurch gekennzeichnet, dass** die Lokalisierung des Leit-Luftfahrzeugs (1) von diesem letzteren mittels eines Systems wie ADS-B kooperativ an das Folge-Luftfahrzeug (2) übertragen wird.

19. Verfahren nach Anspruch 1, **dadurch gekennzeichnet, dass** das Folge-Luftfahrzeug (2) die Lokalisierung des Leit-Luftfahrzeugs (1) mittels eines On-Board-Radars gewinnt.

20. Verfahren nach Anspruch 1, **dadurch gekennzeichnet, dass** das Folge-Luftfahrzeug die Lokalisierung des Leit-Luftfahrzeugs von einer Boden-Lokalisierungsstation gewinnt.

FIG.1

FIG.3

MISE EN MARCHE

20 DÉTERMINATION
DE LA VITESSE CALCULÉE
INITIALE $V_{CAS\ \phi,s}$

21 CALCUL DE LA
DISTANCE DE SÉPARATION
EFFECTIVE $D_M$

22 TEST
$D_n < \Delta L$ ?

NON

24 CALCUL
D'UNE CORRECTION
E
ALERTE ÉQUIPAGE

23 $\Delta t$

OUI

FIG.2